Europäisches Patentamt

European Patent Office

Office européen des brevets

(19)

(11) Veröffentlichungsnummer : **0 539 397 B1**

(12) **EUROPÄISCHE PATENTSCHRIFT**

(45) Veröffentlichungstag der Patentschrift :
30.08.95 Patentblatt 95/35

(51) Int. Cl.$^6$ : **H04N 1/40**

(21) Anmeldenummer : **91911800.0**

(22) Anmeldetag : **10.07.91**

(86) Internationale Anmeldenummer :
**PCT/DE91/00563**

(87) Internationale Veröffentlichungsnummer :
**WO 92/02101 06.02.92 Gazette 92/04**

(54) **VERFAHREN ZUR GENERIERUNG UND SPEICHERUNG VON DIGITALISIERTEN DICHTE-SCHWELLWERTEN ZUR RASTERUNG EINER HALBTON-BILDVORLAGE.**

(30) Priorität : **18.07.90 DE 4022772**

(43) Veröffentlichungstag der Anmeldung :
**05.05.93 Patentblatt 93/18**

(45) Bekanntmachung des Hinweises auf die
Patenterteilung :
**30.08.95 Patentblatt 95/35**

(84) Benannte Vertragsstaaten :
**DE**

(56) Entgegenhaltungen :
**DE-A- 1 901 101**

(56) Entgegenhaltungen :
**US-A- 4 245 260**
**US-A- 4 308 553**
**US-A- 4 413 286**
**US-A- 4 468 442**
**US-A- 4 680 646**
**US-A- 4 918 622**

(73) Patentinhaber : **LINOTYPE-HELL AG**
**Postfach 24 60,**
**Siemenswall**
**D-24023 Kiel (DE)**

(72) Erfinder : **KERZ, Ludo**
**Mainzer Strasse 39**
**D-6501 Saulheim (DE)**

EP 0 539 397 B1

**Beschreibung**

Die Erfindung betrifft ein Verfahren zur Generierung und Speicherung von digitalisierten Dichte-Schwellwerten zur Rasterung einer Halbton-Bildvorlage nach dem Oberbegriff des Anspruchs 1.

Das Raster kann dabei gegen eine Abtastrichtung einer Aufzeichnungseinrichtung gedreht sein, die einen Aufzeichnungsträger entlang Abtastzeilen abtastet. Begrenzungslinien des Ausschnitts des Rasters verlaufen in Abtastrichtung sowie in dazu rechtwinkliger Richtung.

Es ist zur gerasterten Aufzeichnung von Tonwertsignalen (Bildsignalen), die durch Abtastung der Halbton-Bildvorlage gewonnen werden, bekannt, diese Tonwertsignale mit Dichte-Schwellwertsignalen (Rastersignalen) eines gegenüber einer Aufzeichnunqsrichtung gedrehten Rasters zu überlagern (DE-C-19 01 101). Die dazu erzeugten Dichte-Schwellwertsignale bzw. Rastersignale entsprechen einem Dichte-Strukturinhalt eines dem gewählten gedrehten Raster entnommenen Ausschnittes, dessen Begrenzungslinien in der Aufzeichnungsrichtung und in einer dazu orthogonalen Vorschubrichtung liegen. In dem Ausschnitt ist die Grundperiode der Struktur des gedrehten Rasters bezüglich jeder der beiden orthogonalen Richtungen einmal enthalten. Dabei umfaßt der Ausschnitt in Abtastrichtung sowie rechtwinklig dazu mehrere Rasterpunkte (Spots), die neben- und übereinander periodisch angeordnet sind.

Dieser Ausschnitt kann auch als Mehrfach-Referenzzelle oder Superzelle bezeichnet werden. Infolge der Periodizität des Ausschnitts des gedrehten Rasters können die Dichte-Schwellwertsignale (Rastersignale) ohne weiteres periodisch wiederholt werden, um mit den Tonwertsignalen größerer Bildformate bzw. Bildausschnitte überlagert zu werden. Darüber hinaus kann der Rasterausschnitt in so viele in der Bildaufzeichnungsrichtung verlaufende Teillinien aufgelöst sein, daß auf eine Bildzeilenbreite mehrerer solcher Teillinien entfallen. Zu der Durchführung des beschriebenen bekannten Verfahrens wird von Datenspeichern Gebrauch gemacht, in denen die Dichte-Schwellwerte des Rasterausschnitts digital gespeichert werden. Die derart gespeicherten Dichte-Schwellwerte können visualisiert vorgestellt auch als Dichte-Gebirge bzw. Schwellwertgebirge bezeichnet werden. - Die Dichte-Schwellwerte werden in den Datenspeichern in der Form eingespeichert, daß die erforderlichen Rasterinformationen durch vorheriges Abtasten eines Musterrasters und Quantisieren sowie Codieren der Rastersignale eingegeben werden. Die somit in den Datenspeichern enthaltenen digitalen Dichte-Schwellwerte dienen dazu, zur Überlagerung mit den von der Bildvorlage zeilenmäßig abgetasteten Tonwertsignalen in Analogwerte zurückverwandelt zu werden und anschließend in Überlagerungs- und Schwellwertstufen eingespeist zu werden. Typischerweise werden bei dem Abtasten einer optischen Vorlage runde, ovale oder rechteckige Punktformen angewendet, die aus der Mitte heraus wachsen.

Das Problem, wie im einzelnen die zu speichernden Dichte-Schwellwerte zweckmäßig gebildet werden, um eine Halbton-Bildvorlage so gerastert zu reproduzieren, daß das Halbton-Bild gleichmäßig bzw. "ruhig" über eine Teilfläche wirkt, die den gleichen Tonwert hat, wird dabei nicht für den Fall behandelt, daß die Schwellwerte statt durch Abtasten einer optischen Vorlage voll digital nach Maßgabe einer zweidimensionalen Funktion gebildet werden. Diese Funktion wird auch Spotfunktion genannt. Zur voll digitalen Erzeugung der Dichte-Schwellwerte der Rasterpunkte einer Mehrfach-Referenzzelle (Superzelle) nach dem aus der Praxis bekannten Stand der Technik wird zunächst die Gesamtzahl Speicherworte der Mehrfach-Referenzzelle festgestellt. Die Bestimmung der Gesamtanzahl kann nach Maßgabe des Rasterwinkels, der Rasterweite und der Auflösung des Systems erfolgen. Es wird dann eine sortierte Folge der Speicherworte der Mehrfach-Referenzzelle nach Maßgabe der Spotfunktion gebildet. Den Speicherworten der Mehrfach-Referenzzelle werden dann Dichte-Schwellwerte in linearer Abhängigkeit von ihrer Position in der sortierten Folge zugewiesen.

Tatsächlich sind die einzelnen Rasterpunkte (Spots) einer Mehrfach-Referenzzelle (Superzelle) etwas unterschiedlich insofern, als die Anzahl der je einem der Rasterpunkte zugeordneten Speicherworte bei den einzelnen Rasterpunkten schwankt und in der Regel nicht dem sich aus der Gesamtanzahl der Speicherworte der Mehrfach-Referenzzelle und der Anzahl der Rasterpunkte bzw. Subzellen errechnenden Sollwert entspricht. Dies hat zur Folge, daß in benachbarten Rasterpunkten mehr oder weniger Pixel gesetzt werden, wenn nach Maßgabe eines bestimmten Grautons ein bestimmter Bruchteil aller der Mehrfach-Referenzzelle zugeordneten Pixel geschwärzt werden soll. Dadurch entsteht für den Betrachter der reproduzierten Halbton-Bildvorlage der Eindruck unterschiedlich großer schwarzer Punkte auf weißem Grund, jedenfalls dann, wenn der Grauwert deutlich weniger als 50 % beträgt. Wenn dagegen ein dunklerer Grauton, der deutlich über 50 % liegt, beispielsweise bei 70 %, unter Verwendung einer Mehrfach-Referenzzelle reproduziert wird, so entsteht aus ähnlichen Gründen, wie voranstehend für niedrige Grauwerte angegeben, hier der Eindruck unterschiedlich großer heller Flecken auf schwarzem Grund. In beiden Fällen wirkt das reproduzierte Halbton-Bild unruhig.

Der vorliegenden Erfindung liegt daher die Aufgabe zugrunde, ein Verfahren zur Generierung und Speicherung von digitalisierten Dichte-Schwellwerten zur Rasterung einer Halbton-Bildvorlage der eingangs genannten Gattung so weiterzubilden, daß Dichte-Schwellwerte erzeugt werden, mit denen eine Halbton-Bildvorlage so gerastert wird,daß das danach reproduzierte Halbton-Bild gleichmäßig bzw. ruhig wirkt.

Diese Aufgabe wird durch die Gestaltung des Verfahrens mit den in dem kennzeichnenden Teil des Anspruchs 1 angegebenen Merkmalen gelöst.

Dieses Lösungsprinzip beinhaltet konkreter eine Grauwertkorrektur nach Anspruch 2. In dem Funktionsgenerator, der in Abhängigkeit von der Position der Speicherworte in der nach Maßgabe der Spotfunktion sortierten Folge den Betrag der zu vergebenden Dichte-Schwellwerte bestimmt und damit nach Maßgabe eines Grautones die Anzahl zu schwärzender Pixel bestimmt sind Korrekturfunktionen gespeichert. Dabei kann je einem Spot, d.h. einer Subzelle der Mehrfach-Referenzzelle ein Parameter zugeordnet sein, welcher einer festgestellten Abweichung der Istzahl der Speicherworte von der Sollzahl des jeweiligen Spots (Subzelle) entspricht. Wenn der Istwert gleich dem Sollwert ist, findet keine Korrektur statt und die Beträge der zu vergebenden Dichte-Schwellwerte sind proportional zu der Position der Speicherwerte in der sortierten Folge. Damit ist die Zunahme der zu schwärzenden Pixel ebenfalls proportional zu dem geforderten Grauton. Wenn der Istwert der Speicherworte größer als der Sollwert für den jeweiligen Spot bzw. die Subzelle ist, so werden für Speicherworte am Anfang der sortierten Liste höhere Dichte-Schwellwerte vergeben, um damit die Zunahme der zu schwärzenden Pixel für niedrige Grauwerte herabzusetzen, was mit Untersteuerung bezeichnet wird. Für den gleichen Fall eines verhältnismäßig großen Istwerts der Subzelle wird bei Speicherworten am Ende der sortierten Liste die zu vergebenden Dichte-Schwellwerte herabgesetzt, um auf eine gleichbleibende Anzahl weißer Bildpunkte zu kommen.

Der letztgenannte Fall wird als Übersteuerung bezeichnet. Beim Übersteuern und Untersteuern verläuft die Zunahme der Anzahl zu schwärzender Pixel in Abhängigkeit von der Graustufe oder dem Grauwert parallel zu einer ideellen Kurve, die für den Fall zutrifft, daß der Istwert der Speicherworte gleich dem Sollwert für den jeweiligen Spot (Rasterpunkt) ist. Dieser Parallelverlauf der Kurven, insbesondere Geradenabschnitte wird übertragen auf die Funktion als konstante Untersteuerung bzw. Übersteuerung bezeichnet. Generell sind auch Verfahren nicht konstanter Unter-/Übersteuerung denkbar.

In dem anderen Fall, daß der Istwert der Speicherworte verhältnismäßig klein ist, werden für Positionen am Anfang der sortierten Folge die Dichte-Schwellwerte erniedrigt und damit die Anzahl der bei niedrigen Grauwerten zu schwärzenden Pixel überhöht, was wiederum als Übersteuerung bezeichnet wird. Dagegen werden für den gleichen relativ niedrigen Istwert der Spots am Ende der sortierten Folge die Dichte-Schwellwerte erhöht, um die Anzahl zu schwärzender Pixel bei hohen Grauwerten herabzusetzen, was als Untersteuerung gilt.

Die Grauwertkorrektur erfolgt speziell in der Weise, daß bei jeweils einem niedrigen Grauwert deutlich unter 50 % auf die gleiche Anzahl schwarzer Pixel des Rasterpunkts unabhängig von dessen tatsächlicher Anzahl Speicherworte optimiert wird, dagegen bei jeweils einem Grauwert deutlich höher als auf die gleiche Anzahl weißer Pixel des Rasterpunkts unabhängig von dessen tatsächlicher Anzahl Speicherworte. Bei einem Grauwert um 50 %, bei dem sich die weißen und die schwarzen Flächen die Waage halten, wird nicht oder nur wenig korrigiert. Daraus ergeben sich Korrekturgrößen, die je nach Rasterpunkt und Grauwert die einzelnen Rasterpunkte mehr oder weniger unter- oder übersteuern. Die Korrekturgrößen gehen in die Generierung der Dichte-Schwellwerte der Superreferenzzelle für jede Subzelle getrennt ein. Der Rastervorgang unter Verwendung der gespeicherten Dichte-Schwellwerte kann konventionell erfolgen. Dies vereinfacht die praktische Einführung des Verfahrens.

Zwischen den Bereichen des Übersteuerns und des Untersteuerns, die durch den Funktionsgenerator realisiert werden, liegt nach Anspruch 3 ein Übergangsbereich. In ihm wird das Übersteuern und Untersteuern bei einer Annäherung bis zu der Graustufe von 50 % reduziert. Bei dieser Graustufe von 50 % soll weder über- noch untersteuert werden. Der Übergangsbereich kann durch Implementierung einer Funktion höherer Ordnung realisiert werden.

Nach Anspruch 4 bildet der Funktionsgenerator in dem Übergangsbereich einen linearen Zusammenhang zwischen der Anzahl der zu schwärzenden Pixel bzw. der entsprechenden Dichte-Schwellwerte und der sortierten Folge. Dieser Zusammenhang ist in dem Funktionsgenerator verhältnismäßig unkompliziert realisierbar.

Die Korrekturstufe generiert die Schwellwerte bevorzugt nach Maßgabe der in Anspruch 5 angegebenen Funktionsbereiche, die eine schrittweise Zurücknahme der Unter- und Übersteuerung realisieren.

Besonders geeignete Funktionsbereiche der Korrekturstufe sind in Anspruch 6 angegeben.

Bei dem Einsatz einer Spotfunktion, bei der wie üblich die Spots (Rasterpunkte) aus der Mitte herauswachsen, können bei den reproduzierten Halbton-Bildern wiederum störende unterschiedliche Größen von weißen Punkten zwischen den geschwärzten Rasterpunkten dadurch auftreten, daß die weißen Pixel der an den Ecken zusammenstoßenden Rasterpunkte in der Regel ungleichmäßig auf die Ecken verteilt sind. Demnach schwankt in der Praxis wieder die Größe der weißen Punkte und der Eindruck, den das reproduzierte Bild vermittelt, ist unruhig. Um dem abzuhelfen, ist die Weiterbildung des Verfahrens nach Anspruch 7 vorgesehen, welches bei relativ großen Grauwerten, nämlich vorzugsweise größer als 50 %, eingesetzt wird.

Diese sogenannte Weißkorrektur setzt eine weitere Hilfsmaßnahme voraus, nämlich eine Unterteilung jedes Spots in vier Quadranten. Zu der voranstehend beschriebenen Grauwertkorrektur wird dann jeweils ein Quadrat aus je einem Quadranten von vier benachbarten Spots zusammengesetzt, deren Ecken zusammenstoßen.

Die Erfindung wird im folgenden anhand der Zeichnung mit neun Figuren weiter erläutert. Es zeigen:

Fig. 1   einen rotierten Mehrfachspot, der aus zweimal zwei über- und nebeneinander angeordneten quadratischen Spots bzw. Rasterpunkten zusammengesetzt ist und der in einem kleinsten Vergleichsfeld, an dessen Rändern seine Ecken anliegen, angeordnet ist,

Fig. 2   eine Mehrfach-Referenzzelle, in der eine Anzahl rotierter Mehrfachspots aneinandergesetzt sind,

Fig. 3   einen reduzierten Ausschnitt als Referenzbereich aus der Mehrfach-Referenzzelle, wobei der Ausschnitt in einer der beiden orthogonalen Richtungen, nämlich der Höhe, wesentlich kleiner als die Mehrfach-Referenzzelle ist und wobei die Erfindung auch auf den reduzierten Ausschnitt als Referenzbereich anwendbar ist,

Fig. 4   eine vereinfachte Teil-Struktur einer Einrichtung zur digitalisierten Rasterung einer Halbton-Bildvorlage,

Fig. 5   ein Blockdiagramm einer beispielsweisen Einrichtung zur Grauwertkorrektur und Weißkorrektur,

Fig. 6   Charakteristiken eines Funktionsgenerators als Teil der Einrichtung nach Fig. 5,

Fig. 7   den Mehrfachspot in dem kleinsten Vergleichsfeld nach Fig. 1, wobei jeder Spot in vier Quadranten zur Weißkorrektur unterteilt ist,

Fig. 8   ein Ablaufdiagramm zur Grauwertkorrektur,

Fig. 9   ein Ablaufdiagramm zur Weißkorrektur.

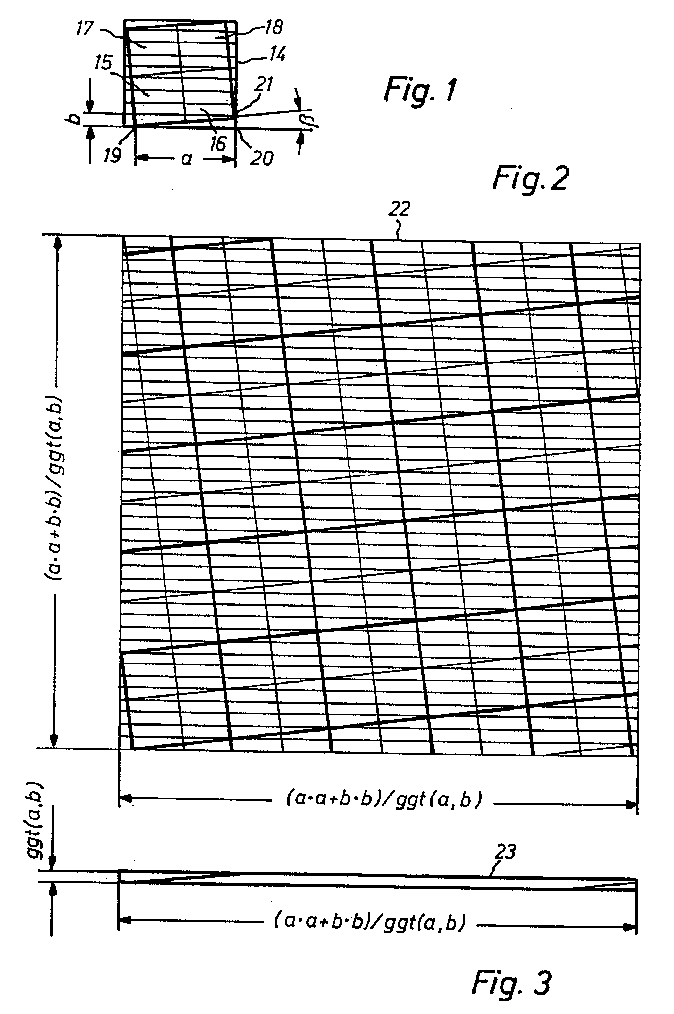

In Fig. 1 ist mit 14 ein kleinstes Vergleichsfeld bezeichnet, in dem $n \cdot n$, mit $n = $ zwei, Spots oder Rasterpunkte 15 - 18 neben- und übereinander gedreht angeordnet sind, so daß die gesamte Anordnung gegenüber dem kleinsten Vergleichsfeld einheitlich gedreht ist. Den Spots entsprechen Subzellen des Vergleichsfeldes. In dem kleinsten Vergleichsfeld werden durch die Anordnung des Mehrfachspots die Größen a und b definiert, wobei a der Abstand eines Eckpunkts 19 der Gruppe Spots 15 - 18 zu der Ecke 20 des Vergleichsfelds ist. Die Größe b ist der hierzu rechtwinklig orientierte Abstand zwischen dieser Ecke 20 des Vergleichsfelds und einem anderen Eckpunkt 21 der Gruppe der Spots. Ein Rasterwinkel ist mit β bezeichnet, um den die Gruppe der Rasterpunkte bzw. Spots 15 - 18 gegenüber der Aufzeichnungsrichtung, die parallel zu zwei Rändern des kleinsten Vergleichsfelds 1 verläuft, gedreht ist.

Durch die Gruppierung einer Anzahl Spots in dem kleinsten Vergleichsfeld, wie zu Fig. 1 beschrieben, können die Rasterwinkel und Rasterweiten mit steigender Anzahl von Spots beliebig fein werden, unter Einhaltung der Bedingung, daß die Ecken der Gruppe der Spots immer definiert je einem der Pixel des in Pixelabständen unterteilten Vergleichsfelds zugeordnet sein sollen bzw. auf dieses Pixel treffen sollen.

Die Anzahl Speicherworte je Spot schwankt wegen eines Digitalisierungseffekts, der in der Zuordnung der Speicherworte zu einem Spot an dessen gedachter Begrenzungslinie begründet ist. Es werden dem Spot die Speicherworte zugeordnet, deren Mittelpunkte innerhalb der Begrenzungslinien des Spots liegen. Daraus ergibt sich der Istwert der Speicherworte in dem Spot.

Das Erfordernis der Periodizität der Mehrfach-Referenzzelle, die mit solchen Mehrfachspots aufgebaut ist, führt normalerweise zu verhältnismäßig großen Mehrfach-Referenzzellen, da die Gruppierungen der Spots so oft wiederholt werden, bis die Periodizität bzw. wrap-around-Bedingung in jeder der beiden orthogonalen Richtungen der Mehrfach-Referenzzelle gegeben ist.

Der in Fig. 3 dargestellte Referenzbereich 23 stellt einen definierten Ausschnitt aus der Mehrfach-Referenzzelle gemäß Fig. 2 dar. Die Erstreckung des Referenzbereichs in einer der beiden orthogonalen Richtungen, nämlich der Breite, die die gleiche ist, wie diejenige der Mehrfach-Referenzzelle, nämlich

$$w = a \cdot a + b \cdot b)/\mathrm{ggt}(a,b).$$

In der hierzu orthogonalen Richtung, nämlich der Höhe, ist jedoch die Erstreckung des Referenzbereichs erheblich gegenüber derjenigen der Mehrfach-Referenzzelle verringert, nämlich um

ggt $(a,b)$, wobei dieser größte gemeinsame Teiler von a und b bei den hier vorausgesetzten quadratischen Pixeln die Breite bzw. Höhe eines Pixels darstellt.

Der Versatz, mit dem deswegen in den Referenzbereich der Fig. 3 beim Abtasten in Abtastzeilenrichtung bzw. in Weitenrichtung jeweils einzuspringen ist, nachdem die Dichte-Schwellwerte aus diesem Referenzbereich einmal ausgelesen sind, beträgt hier 57 bei einer Weite von 65.

In Richtung der Abtastzeile X (wobei X in der Figur nicht dargestellt ist) ist die jeweils neue X-Position, bei der das Auslesen der Dichte-Schwellwerte beginnt:

$$X_{neu} = (X_{alt} + \text{Versatz}) \text{ modulo } w.$$

Darin ist die Weite w:

$$w = (a \cdot a + b \cdot b)/\mathrm{ggt}(a,b).$$

Die Dichte-Schwellwerte sind für jedes Speicherwort der Mehrfach-Referenzzelle eines Spots bzw. eines Rasterpunkts primär durch eine Spotfunktion vorgegeben. Die Aspekte der vorliegenden Erfindung beziehen sich auf Korrekturen dieser durch die Spotfunktion vorgegebenen Dichte-Schwellwerte.

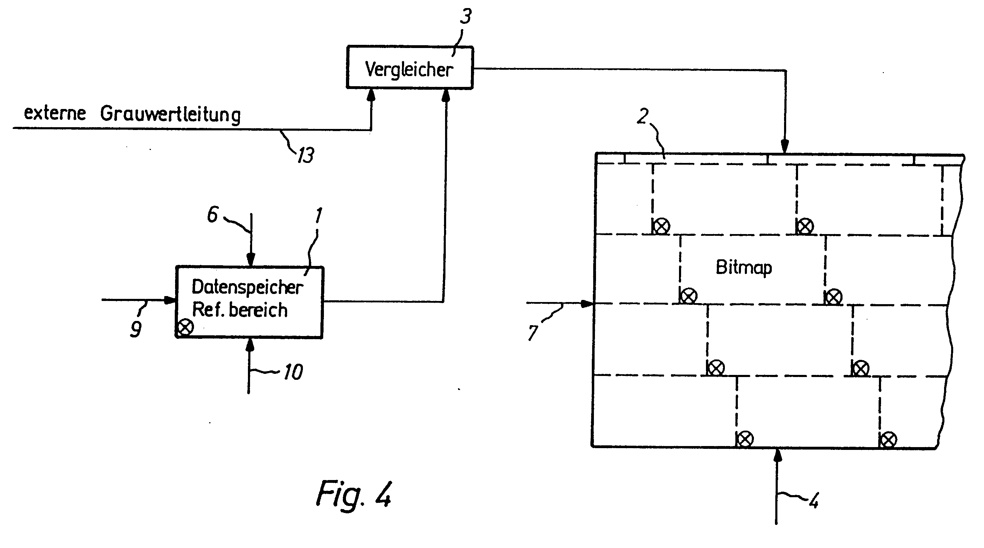

In Fig. 4 ist stark vereinfachend die Struktur einer Einrichtung dargestellt, mit welcher das Verfahren zur digitalisierten Rasterung einer Halbton-Bildvorlage unter Verwendung eines Datenspeichers, in dem nur die Dichte-Schwellwerte eines reduzierten Ausschnitts eines gegen die Abtastrichtung gedrehten Rasters 23 gemäß Fig. 3 gespeichert sind, ausgeübt wird. Die Einrichtung nach Fig. 4 beinhaltet als Teil eines Raster-Image-Prozessors die Mittel, um in einer Bitmap 2 Signale in Abhängigkeit von einem Vergleichsergebnis zum Hell/Dunkel-Steuern einer in Fig. 4 nicht dargestellten Aufzeichnungseinrichtung zu speichern, als ob zum Vergleich von Tonwertsignalen einer zu rasternden abgetasteten Halbton-Bildvorlage mit vorgegebenen Schwellwerten eine Mehrfach-Referenzzelle 22 gemäß Fig. 2 als vollständiger Ausschnitt des Rasters zur Verfügung stünde.

In dem Datenspeicher des Referenzbereichs 1 sind Dichte-Schwellwerte des Referenzbereichs, der nur einen reduzierten Ausschnitt darstellt, gemäß einer Spotfunktion mit nachfolgenden Korrekturen eingespeichert und und spalten- sowie zeilenweise adressierbar. Die Bitmap 2 ist ebenfalls spalten- und zeilenweise adressierbar, so daß einzelne Speicherplätze (Bits) entsprechend einem in einem Vergleicher 3 durchgeführten Vergleich zu setzen sind oder nicht.

Zur Spaltenadressierung der Bitmap 2 dient ein Eingang 4 und zur zeilenweisen Adressierung ein Eingang 7. Die zeilenweise Adressierung des Datenspeichers des Referenzbereichs 1 erfolgt an einem Eingang 9 und zum versetzten Adressieren des Referenzbereichs, in dem die Dichte-Schwellwerte eines reduzierten Ausschnitts des Rasters gespeichert sind, ist ein Eingang 6 an dem Datenspeicher 1 vorgesehen.

Zum getakteten Betrieb der in Fig. 4 dargestellten Einrichtung wird bei jedem Taktimpuls zum einen ein Bit der Bitmap 2 adressiert und zum anderen ein Schwellwert in dem Datenspeicher des Referenzbereichs adressiert, welcher dem adressierten Bit entspricht. Das deswegen am Ausgang des Datenspeichers 1 anstehende Schwellwertsignal wird in dem Vergleicher 3 mit einem Tonwertsignal auf der Grauwertleitung 13 verglichen, welches durch Abtastung der Halbton-Bildvorlage und gegebenenfalls anschließende Signalverarbeitung entstanden ist. Das Ergebnis dieses in dem Vergleicher 3 durchgeführten Vergleichs wird in binärer Form in das in der Bitmap 2, wie oben beschrieben, adressierte Bit eingetragen, welches somit nach Maßgabe des Tonwerts und der angesprochenen Stelle des Referenzbereichs gesetzt wird oder nicht. Zur Hell-Dunkelsteuerung einer nicht dargestellten Aufzeichnungseinrichtung wird dieser Inhalt aus der Bitmap 2 ausgelesen.

Die nachfolgende detaillierte Beschreibung des erfindungsgemäßen Verfahrens, aus der sich weitere Merkmale und Vorteile ergeben, geht von einem Referenzbereich der Mehrfach-Referenzzelle gemäß Fig. 3 aus, wie weiter vorne beschrieben wurde. Dieser Referenzbereich enthält $n \cdot n$ Rasterpunkte (Spots).

Zur Erläuterung wird auf zwei verschiedene Koordinatensysteme Bezug genommen, die zueinander in einem bestimmten Verhältnis stehen. Vereinfachend wird hier angenommen, daß beide Koordinatensysteme orthogonal seien und gleiche Skalierungen für beide Achsen aufweisen.

Das erste Koordinatensystem ist das der Bitmap, siehe 2 in Fig. 4. Die Bitmap ist ein Abbild der Pixel der Wiedergabeeinrichtung. Jedes Bit der Bitmap hat die Breite und die Höhe von einer Einheit. Die Achsen werden mit x und y bezeichnet.

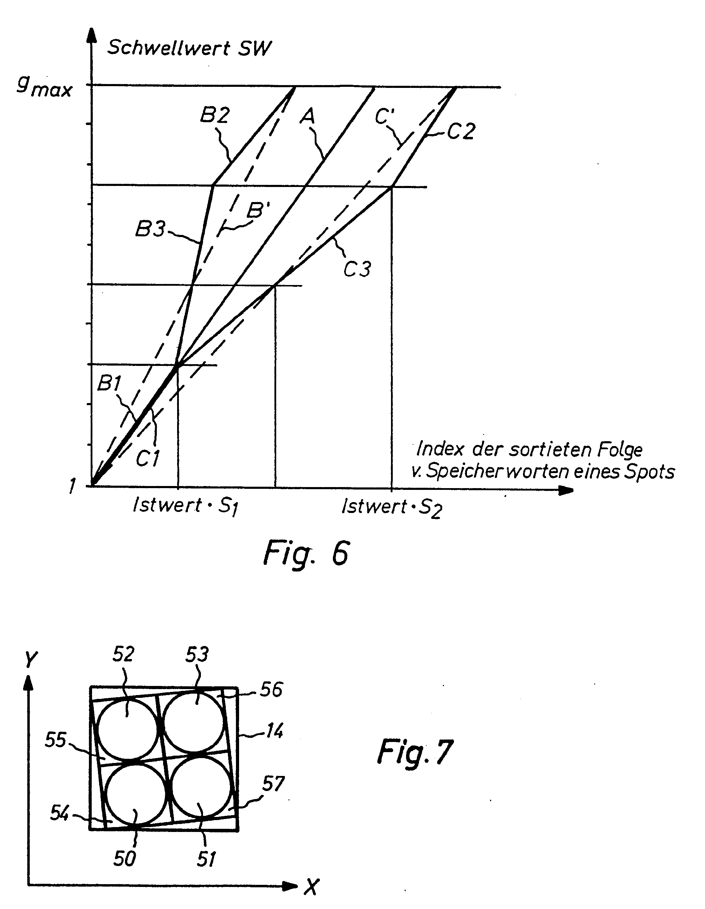

Das zweite Koordinatensystem ist das der Spots, wobei ein Spot die Breite und Höhe 1 hat. Die Achsen werden mit $x'$ und $y'$ bezeichnet, vgl. auch Fig. 7. In aller Regel ist dieses $x'$, $y'$-Koordinatensystem zu dem x, y-Koordinatensystem um einen Winkel $\beta$ rotiert.

Eine Umrechnung von x, y zu $x'$, $y'$-Koordinaten kann nach folgenden Formeln erfolgen:

$$x' = k \cdot x \cdot \cos\beta + k \cdot y \cdot \sin\beta$$
$$y' = - k \cdot x \cdot \sin\beta + k \cdot y \cdot \cos\beta$$

wobei die Konstante k der Umrechnungsfaktor einer Längeneinheit des x, y-Raumes in den $x'$, $y'$-Raum ist.

Als Koordinate eines Pixels wird dessen Mittelpunkt angesehen. Die Koordinate des Pixels im Ursprung des x, y-Raumes ist daher 0,5/0,5 und nicht wie vielleicht erwartet 0/0.

Weiterhin werden folgende Festlegungen getroffen: Der gewünschte Grauwert wird durch eine ganze Zahl zwischen 0 und $g_{max}$ dargestellt, wobei $g_{max}$ der maximale Schwellwert ist. Der Grauwert 0 entspricht schwarz (100 % Farbe) und $g_{max}$ entspricht weiß (0 % Farbe). Um jetzt den Grauwert g zu realisieren, würde man alle Bits der Bitmap auf 1 setzen, deren zugehörigen Werte in der Referenzzelle Werte kleiner als g enthalten. Die Zahlenwerte der Worte in der Referenzzelle bestimmen also die Reihenfolge, in der die Bits für zunehmend dunkleres Grau zu setzen sind. Diese Zahlenwerte werden auch als Schwellwertsignale bezeichnet, die Referenzzelle auch als Schwellwertgebirge. Außerdem ist ersichtlich, daß die Schwärzung monoton zunehmen muß, d.h. ein Bit (oder Pixel), das einmal gesetzt ist, kann für einen dunkleren Ton nicht mehr zurückgesetzt werden. Der Wertebereich der Schwellwerte ergibt sich zu $1...g_{max}$. Damit beträgt die Anzahl der darstellbaren

Graustufen $g_{max}$ + 1.

Bei Rasterpunkten (Spots), die mehr als $g_{max}$ Elemente (Pixel) enthalten, kommen Schwellwerte doppelt vor, bei Spots mit weniger als $g_{max}$ Elementen sind nicht alle möglichen numerischen Werte vertreten, d.h. die Anzahl der darstellbaren Graustufen ist geringer. Um eine kontinuierliche Tonzunahme zu gewährleisten, ist es in beiden Fällen erforderlich, daß die Schwellwerte gleichmäßig auf den Adressraum $1...g_{max}$ verteilt werden.

Die Schwellwerte werden in der Referenzzelle bei einer digitalen Realisierung aufgrund einer zweidimensionalen Funktion (Spotfunktion) mit den auf den Bereich 0 ...0.99 normierten Eingangsparametern x′ und y′ vergeben. x′ und y′ beschreiben jeweils eine Koordinate innerhalb der Fläche des Spots. Aus den von der Spotfunktion zurückgelieferten Funktionswerten könnten direkt die Schwellwerte abgeleitet werden. Um eine homogene Verteilung der Schwellwerte über deren Wertebereich zu gewährleisten, wird ein Zwischenschritt vorgesehen. Hierzu wird die Spotfunktion für jedes Element des Spots aufgerufen, und der zurückgelieferte Funktionswert wird zusammen mit der x, y-Koordinate des Elements in eine Liste eingetragen. Die Listenelemente werden in Reihenfolge der Funktionswerte sortiert. Die Schwellwerte der in der sortierten Liste eingetragenen Elemente ergeben sich dann wie folgt:

$$sw = m_0 \cdot i + 1$$

wobei:

$$sw = \text{Schwellwert}$$
$$i = \text{Position des Elementes in der sortierten Liste}$$
$$m_0 = \frac{g_{max}}{\text{Anzahl der Listenelemente} + 1}$$

Damit ist die kontinuierliche Vergabe der Schwellwerte gesichert.

Für die Mehrfach-Referenzzelle ist der Vorgang für alle Subzellen ( = Spots) zu wiederholen, um allen Elementen der Mehrfach-Referenzzelle einen Schwellwert zuzuweisen.

Zu der Notwendigkeit einer Grauwertkorrektur ist davon auszugehen, daß in einer Mehrfach-Referenzzelle jeder Spot nur in der Theorie gleich viele Elemente enthält. In der Praxis schwankt diese Anzahl jedoch bedingt durch die Digitalisierungseffekte der idealen Spots. Es wird daher zwischen einem Sollwert und einem Istwert unterschieden. Der Istwert eines Spots ergibt sich durch Auszählen der Elemente nach der Digitalisierung der Kanten des Spots. Der Sollwert ergibt sich aus:

$$\text{soll} = (a \cdot a + b \cdot b)/(n \cdot n)$$

Wie schon weiter vorstehend erläutert, ergeben sich aus dem Unterschied von Soll und Ist bei einem bestimmten Grauwert unterschiedliche große schwarze (bzw. weiße) Flecke in den verschiedenen Spots der Mehrfach-Referenzzelle.

Um zur Egalisierung der schwarzen (bzw. weißen) Flecken der Spots die weiter oben allgemein beschriebene Unter- und Übersteuerungskorrektur durchzuführen, wird der Schwellwert nach Maßgabe einer Funktion generiert, die in drei Abschnitte (Funktionsbereiche) unterteilt ist:

1. Abschnitt für $0 < i < \text{Istwert} \cdot s_1$:

$$sw = f_1(i) + 1 = m_{soll} \cdot i + 1$$

wobei:

$$m_{soll} = \frac{g_{max}}{\text{Sollwert} + 1}$$

2. Abschnitt für $\text{Istwert} \cdot s_1 < i < \text{Istwert} \cdot s_2$:

$$sw = \frac{s_2 - i}{s_2 - s_1} \cdot f_1(i) + \frac{i - s_1}{s_2 - s_1} \cdot f_2(i) + 1$$

3. Abschnitt für $\text{Istwert} \cdot s_2 < i < \text{Istwert}$

$$sw = f_2(i) + 1 = m_{soll} \cdot i + b + 1$$

wobei:

$$b = m_{soll} \cdot (\text{Sollwert} - \text{Istwert})$$

Die Werte $s_1$ und $s_2$ erfüllen die mathematische Ungleichung $0 < s_1 < s_2 < 1$ und werden empirisch ermittelt. In der Praxis haben sich Werte von ca. 0.3 und 0.7 für $s_1$ und $s_2$ als brauchbar erwiesen. Die Beziehung für den 2. Abschnitt bewirkt einen kontinuierlichen Übergang von $f_1(i)$ im 1. Abschnitt auf $f_2(i)$ im 2. Abschnitt. Aufwendiger ist es, im Sinne eines Feintunings mehr Abschnitte oder Funktionen höherer Ordnung oder andere Arten des Übergangs im 2. Abschnitt zu verwenden.

Im 1. und 3. Abschnitt sind die Fehler, die sich aus Abweichungen des Istwerts der Pixel eines Spots von dem Sollwert ergeben, vollständig korrigiert. Wenn der Istwert eines Spots besonders stark vom Sollwert abweicht, so fällt dies in dem mittleren, 2. Abschnitt immer noch auf.

Dies kann abgemildert werden, indem in Abhängigkeit vom Istwert ein tolerierbarer Fehler in den Abschnitten 1 und 3 zugelassen wird, um im 2. Abschnitt die Spots zueinander etwas zu homogenisieren.

6

Zu der weiter oben allgemeiner beschriebenen Weißkorrektur werden die Spots zusätzlich in Quadranten unterteilt, die für Grauwerte von 0 - 50 % und 50 - 100 % jeweils anders zusammengefaßt werden. Dadurch wird auch die Grauwertkorrektur zweigeteilt.

Hierzu wird wie folgt vorgegangen:

1. Für alle Quadranten aller Spots der Mehrfach-Referenzzelle werden sortierte Listen angelegt, wie sie bereits beschrieben wurden.

2. Für jeden Spot der Superzelle werden die sortierten Listen (Quadrantenlisten) der vier Quadranten zusammengefaßt. Dies erfolgt in einer zusätzlichen Verweisliste. Die Einträge dieser Verweisliste zeigen auf individuelle Einträge in den vier verschiedenen Quadrantenlisten. Die Verweise werden so vergeben, daß sie wieder eine nach Funktionswerten sortierte (indirekte) Liste bilden. Dieser Vorgang ist so vorstellbar, daß alle vier Quadrantenlisten virtuell zu einer neuen Liste verbunden und neu durchsortiert werden. Dieser Vorgang wird als "verkämmen" bezeichnet. Danach werden die Korrekturkurven entsprechend den in Abschnitten unterteilten, zur Grauwertkorrektur erläuterten Funktionen bestimmt, und die Schwellwerte werden für die erste Hälfte der Elemente der Verweisliste vergeben. Jeder Eintrag in der Quadrantenliste, dem ein Schwellwert zugeordnet wird, wird als ungültig gekennzeichnet. Damit sind die Schwellwerte für 0 bis 50 % vergeben.

3. Jetzt sind noch die Schwellwerte für 50 bis 100 % zu vergeben. Hierzu werden je ein Quadrant von vier benachbarten Spots in der oben beschriebenen Weise verkämmt. Da bereits in dem obigen Schritt die Hälfte der Elemente bearbeitet wurde, ergibt sich ein entsprechend niedriger Istwert, der deshalb verdoppelt wird, bevor die Korrekturkurven bestimmt werden. Die Schwellwerte werden nach einer leicht modifizierten Formel generiert.

$$sw = f(i) + \frac{g_{max}}{2} + 1 \text{ (anstatt } sw = f(i) + 1)$$

wobei

$f(i)$ die abschnittsweise definierten Korrekturkurven darstellt.

Das höhere Displacement von $\frac{g_{max}}{2} + 1$ kompensiert die bereits im vorigen Schritt verarbeiteten Schwellwerte.

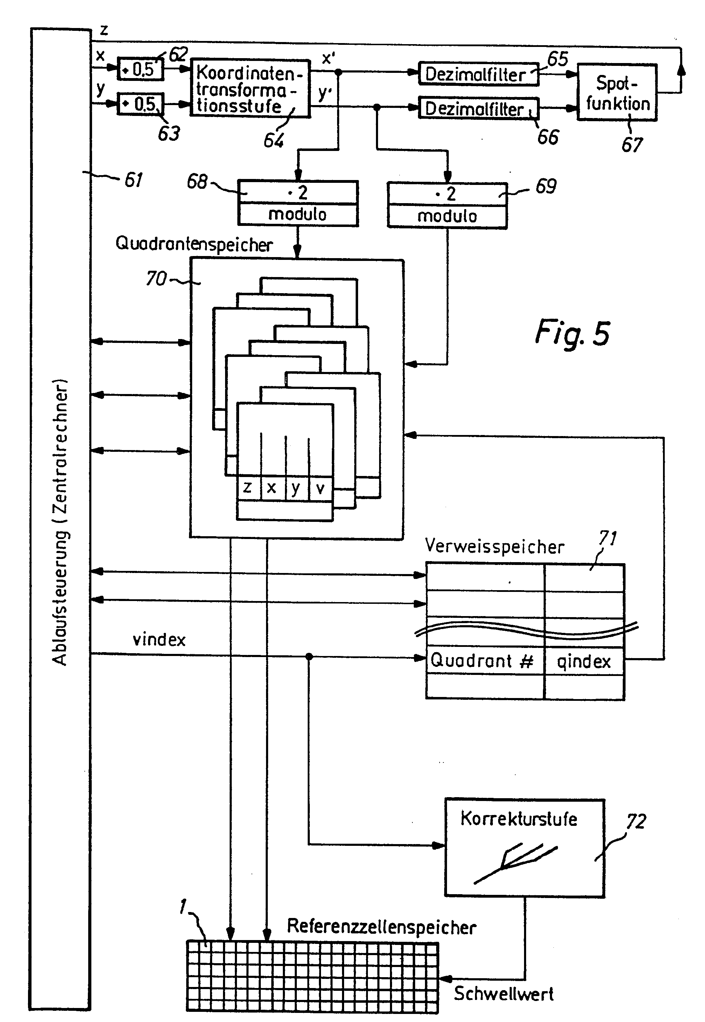

In der beispielsweisen Einrichtung zur Grauwert- und Weißkorrektur nach Fig. 5 erfolgt die Generierung der Schwellwerte für die Mehrfach-Referenzzelle, die gleich dem Datenspeicher 1 des Referenzbereichs ist, in mehreren Stufen:

Zunächst gilt es, den Funktionswert der Spotfunktion für jedes Element der Mehrfach-Referenzzelle zu bestimmen und in Quadrantenspeichern 70, welche die Quadrantenlisten enthalten, zwischenzuspeichern. Hierzu generiert eine Ablaufsteuerung 61 nacheinander die möglichen Wertepapiere für x = 0...(w-1) und y = 0...(h-1). Die folgende Beschreibung der Vorgänge ist für alle Wertepaare zu wiederholen: Sowohl zu x als auch y wird zunächst 0,5 in Addierern 62, 63 addiert, um den Mittelpunkt des zu bearbeitenden Elementes zu beschreiben. Dieses Wertepaar wird dann in einer Koordinatentransformationsstufe 64 in das Wertepaar x' und y' transformiert. Das Wertepaar x' und y' gelangt zum einen über Dezimalfilterstufen 65, 66, die nur die Nachkommastellen passieren lassen, zu dem Spotfunktionsgeber 67. Am Ausgang des Spotfunktionsgebers steht das Ergebnis z der Spotfunktion zur Verfügung.

Zum anderen werden x' und y' zur Bestimmung des Quadranten herangezogen, zu dem das aktuelle Wertepaar gehört. Dies geschieht, indem x' und y' zunächst in Multiplizierern mit Modulostufen 68, 69 mit 2 multipliziert und anschließend durch Anwendung von modulo (2 · n) auf den Bereich 0... (2·n-1), 0... (2·n-1) abgebildet werden. Dieses so gewonnene Wertepaar selektiert den Quadranten aus einem Quadrantenspeicher 70. Der Quadrantenspeicher 70 besteht aus (2·n) (2·n) Speicherblöcken (Quadranten). Jedem Quadranten ist ein Speicherbereich zugeordnet, wobei unter jeder Adresse ein Datenquartett gespeichert werden kann. Dieses Quartett besteht aus einem Funktionswert z, dem Wertepaar x/y und einem Gültigkeitsbit v. Fernerhin existiert in dem Quadrantenspeicher 70 ein nicht dargestellter Anzahlzähler, der die Anzahl der genutzten Einträge speichert. Die Werte z und x/y werden in den selektierten Quadranten in aufsteigender Reihenfolge für den Wert z einsortiert, und das zugehörige Gültigkeitsbit v wird gesetzt. Außerdem wird der Anzahlzähler um 1 erhöht.

Als nächstes gilt es, die Schwellwerte für 0 - 50 % in dem Mehrfach-Referenzspeicher zu vergeben. Dies geschieht in n·n Arbeitszyklen, wobei in jedem Arbeitszyklus je vier Quadranten eines Spots abgearbeitet werden. In jedem Arbeitszyklus wird zunächst eine Verweisliste in einem Verweisspeicher 71 aufgebaut. Der Verweisspeicher besteht aus einem Speicherbereich. Jedes Element des Speicherbereichs enthält ein Datenduett: Die Selektionsnummer eines Quadranten und die Adresse eines Datenquartetts innerhalb dieses Quadranten (qindex). Dies wird auch als "indirekte Adressierung" bezeichnet. Für jedes Datenquartett in den vier selektierten Quadranten wird ein Eintrag in den Verweisspeicher erzeugt. Dies geschieht derart, daß die Einträge in dem Verweisspeicher in nach z sortierter Reihenfolge auf die Quadranten-Datenquartette verweisen.

Die Anzahl der Einträge im Verweisspeicher ist auch identisch mit der Anzahl von Schwellwertelementen (entsprechend Pixeln) für den in diesem Arbeitszyklus bearbeiteten Spot und damit dem Istwert der Speicherworte für die Parameterberechnung für die Korrekturstufe. Die Vorgänge in der Korrekturstufe sind weiter oben beschrieben. Die Ablaufsteuerung berechnet die Parameter $m_{soll}$, b, Istwert·$s_1$, Istwert·$s_2$ und lädt sie in eine Korrekturstufe 72 mit einem Funktionsgenerator. Hierin erfolgt die eigentliche Schwellwertzuweisung. Dazu wird mit vindex = 0...(Istwert/2) nacheinander jeweils ein Eintrag in dem Verweisspeicher 71 adressiert, und weiterhin wird über dessen Inhalt ein Datenquartett aus einem Quadranten des Quadrantenspeichers 70 adressiert. Das x/y Wertepaar aus dem Datenquartett wiederum adressiert ein Element der Mehrfach-Referenzzelle 1. vindex wird auch der Korrekturstufe 72 zugeleitet, und an deren Ausgang steht der Schwellwert zur Verfügung, der dem adressierten Element der Mehrfach-Referenzzelle zugewiesen wird. Außerdem wird das Gültigkeitsbit v gelöscht. Der Vorgang wird für vindex nur bis Istwert/2 wiederholt, da nur die Schwellwerte bis 50 % in diesem Schritt vergeben werden.

Die Funktionen, die mit dem Funktionsgenerator in der Korrekturstufe 72 realisiert werden, werden anhand von drei korrigierten Kennlinien in Fig. 6 erläutert. Die Kennlinien stellen den Zusammenhang zwischen dem Index der sortierten Folge von Speicherworten eines Spots (Abszisse) und dem Schwellwert (Ordinate) dar. Die Kurve A entspricht dabei dem idealen Zusammenhang, bei welchem der Istwert der Anzahl Speicherworte eines Spots gleich dem Sollwert ist. Die Kurve B beinhaltet den Fall, daß ein Spot tatsächlich weniger Speicherworte enthält als es dem theoretischen Sollwert entspricht. Umgekehrt stellt die Kurve C den Fall dar, in dem der Istwert der Speicherworte größer als der Sollwert ist.

Aus Fig. 6 ist ersichtlich, daß für die Idealkurve A stets der gleiche lineare Zusammenhang zwischen dem Index in die sortierte Folge und dem (zu vergebenden) Dichte-Schwellwert besteht. Für das Polygon C1 - C3 hingegen wird für Elemente vom Anfang der sortierten Folge bis zu Istwert·$s_1$, in einem ersten Abschnitt C1 der Idealkurve A gefolgt, wodurch die vergebenen Schweliwerte erhöht werden und damit die Anzahl tatsächlich geschwärzter Pixel für leichte Grautöne untersteuert wird. Bei der gleichen Kurve C1 - C3, jedoch für Elemente von Istwert·$s_2$ bis zum Ende der sortierten Folge, wird einer Kurve parallel zur Idealkurve A gefolgt, was einer Herabsetzung der Schwellwerte und damit einer Übersteuerung entspricht, siehe Abschnitt C2. Die Übersteuerung bei C2 bzw. die Untersteuerung bei C1 werden deutlich im Vergleich zu einer unterbrochen dargestellten Kurve C', welche den Zusammenhang zwischen dem Index der sortierten Folge und dem Schwellwert ohne Korrektur zeigt. Der untersteuerte Abschnitt C1 und der übersteuerte Abschnitt C2 sind durch einen ausgleichenden Abschnitt C3 verbunden. Dort geht die Untersteuerung von dem Abschnitt C1 kontinuierlich zurück bis zu der Position Istwert/2, welche auch einem Grauwert von 50 % entspricht, bei der weder über- noch untersteuert wird, und steigt dann übersteuernd bis zu dem Abschnitt C2 an. Das Polygon B1 - B3 hat einen Abschnitt B1 für Elemente am Anfang der sortierten Liste, bei dem die Schwellwerte niedriger sind und damit mehr Pixel geschwärzt werden (Übersteuerung) als ohne Korrektur, was sich aus der unkorrigierten Linie B' ergibt. Der Abschnitt B2 stellt einen Abschnitt des Untersteuerns dar. Beide Abschnitte B1 und B2 werden durch einen ausgleichenden Abschnitt B3 überbrückt.

Mit dem Verfahren, das mit der Einrichtung nach Fig. 5 ausgeübt wird, wird somit bei der Reproduktion von kleinen Grauwerten letztlich auf die gleichen Anzahlen zu schwärzender Pixel für die einzelnen Rasterpunkte (Spots) 15 - 18 der Fig. 1 optimiert und bei großen Grauwerten auf gleiche Anzahlen weißer (ungeschwärzter Pixel optimiert.

Die weißen Teilflächen (Flecken) konzentrieren sich jedoch in den Ecken der Rasterpunkte für die meist üblichen Spotfunktionen, bei denen die schwarzen Flecke aus der Mitte der Rasterpunkte heraus wachsen. Dies bedeutet, daß die weißen Flecken oder Punkte, welche das Auge erfaßt, sich bei quadratischen Rasterpunkten aus Abschnitten von vier Rasterpunkten zusammensetzen. Dies ist in Fig. 7 angedeutet, in welcher die geschwärzten Teile der Rasterpunkte nur durch Kreise 50 - 53 angedeutet sind, welche die schwarzen Flecken umschließen. Da sich die weißen Flecken also aus weißen Bereichen mehrerer Rasterpunkte zusammensetzen, kann die Größe der weißen Flecken selbst dann schwanken, wenn die Anzahlen der weißen bzw. ungesetzten Pixel entsprechend der voranstehend beschriebenen Grauwertkorrektur bei großen Grauwerten für die individuellen Rasterpunkte optimiert wurden.

Um auch diese Schwankungen der Größe der weißen Punkte zu eliminieren, wird jeder Rasterpunkt bzw. Spot in vier Quadranten unterteilt. In Fig. 7 ist die Unterteilung mit unterbrochenen Linien angedeutet. Ein zentraler weißer Fleck setzt sich somit aus den Quadranten 54 - 57 verschiedener Rasterpunkte zusammen.

Zuletzt sind noch die Schwellwerte für 50 - 100 % der Weißkorrektur zu vergeben. Hierzu wird der Vorgang, der vorangehend für die Grauwertkorrektur beschrieben wurde, leicht abgewandelt wiederholt. Der Ablauf geschieht wieder in n·n Arbeitszyklen, wobei jetzt jedoch vier benachbarte Quadranten aus vier benachbarten Spots zusammengefaßt werden. Bei dem Aufbau der Verweisliste in dem Verweisspeicher 71 werden Datenquartette, deren Gültigkeitsbit v gelöscht wurde, nicht berücksichtigt, da für sie bereits Schwellwerte vergeben wurden. Die Anzahl der Einträge im Verweisspeicher entspricht jetzt nur dem halben Istwert; der Istwert ergibt sich also zu :Anzahl der Einträge im Verweisspeicher·2.

Beim Laden der Korrekturstufenparameter für die Korrekturstufe 72 wird ein Offset von $\frac{g_{max}}{2}$ + 1 anstatt 1 geladen, um die korrekten Schwellwerte zu erhalten.

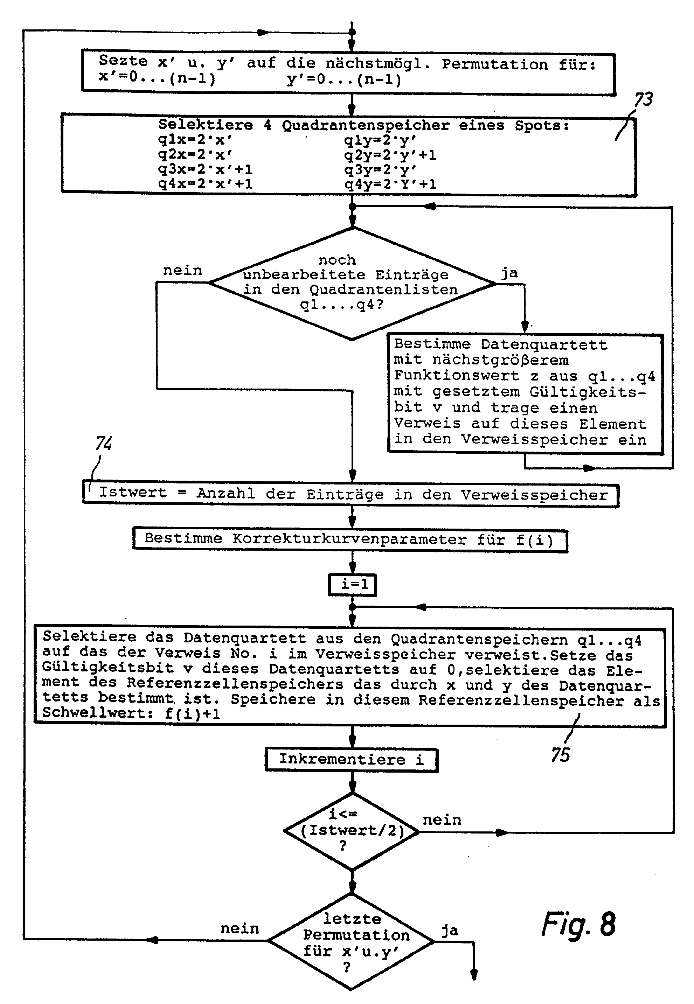

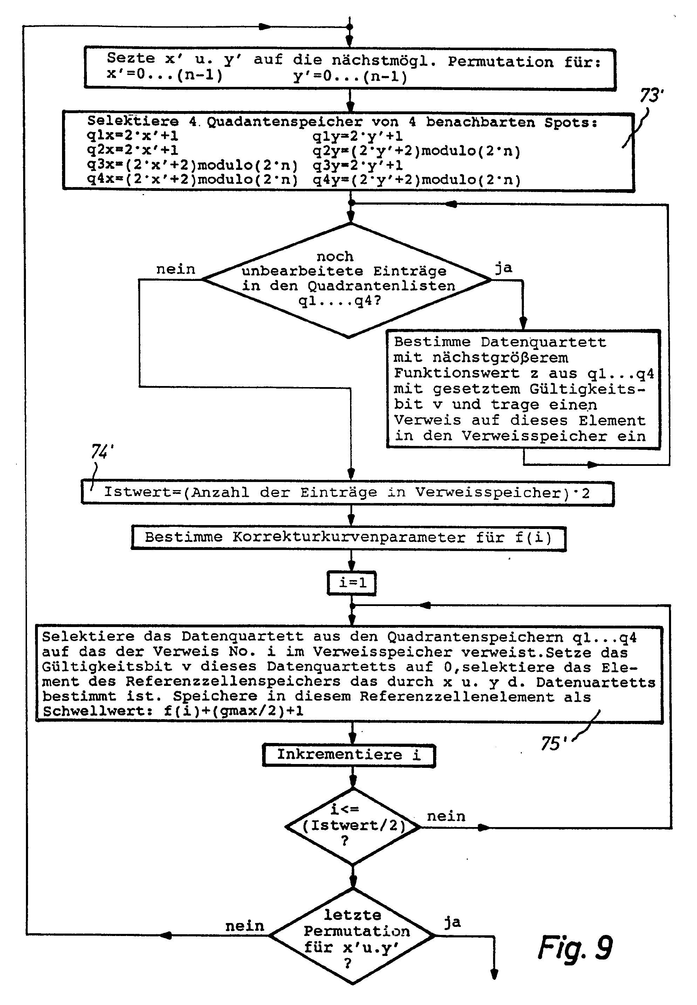

Die beschriebenen, in der Einrichtung gemäß Fig. 5 ablaufenden Vorgänge sind für die Grauwertkorrektur für Schwellwerte 0 - 50 % in dem Ablaufdiagramm nach Fig. 8 zusammengefaßt und für die Weißkorrektur für Schwellwerte 50 - 100 % in dem Ablaufdiagramm nach Fig. 9. Dabei unterscheiden sich nur Inhalte der Blöcke 73′, 74′, 75′ in Fig. 9 von den entsprechenden Blöcken 73, 74, 75 in Fig. 8.

## Patentansprüche

1.	Verfahren zur Generierung und Speicherung von digitalisierten Dichte-Schwellwerten zur Rasterung einer Halbton-Bildvorlage, insbesondere in Form eines Farbauszugs (Plane), wobei in wenigstens einem Datenspeicher die Dichte-Schwellwerte eines Ausschnitts eines Rasters in Abhängigkeit von einer Spotfunktion als Speicherworte gespeichert werden, wobei in dem Ausschnitt mehrere Spots (Rasterpunkte), die jeweils eine Anzahl Speicherworte umfassen, eine Mehrfach-Referenzzelle (Superzelle) bildend neben- und übereinander periodisch angeordnet sind, wobei für die Speicherworte des Datenspeichers des Ausschnittes eine sortierte Folge nach Maßgabe der Spotfunktion ermittelt wird und den Speicherworten des Datenspeichers in Abhängigkeit von der Position des Speicherwortes in der sortierten Folge Dichte-Schwellwerte zugeordnet werden,
	**dadurch gekennzeichnet**,
	daß jedem Spot des Ausschnitts des Rasters eine Anzahl von Speicherworten zugeordnet wird, für jeden Spot eine sortierte Folge dieser Speicherworte nach Maßgabe der Spotfunktion ermittelt wird, und für jeden Spot den dem Spot zugeordneten Speicherworten in Abhängigkeit von ihrer Position in der sortierten Folge Dichte-Schwellwerte zugeordnet werden.

2.	Verfahren nach Anspruch 1,
	**dadurch gekennzeichnet**,
	daß für jeden Spot des Ausschnitts des Rasters einzeln die tatsächliche Anzahl von Speicherworten ermittelt wird, für jeden Spot eine sortierte Folge der Speicherworte nach Maßgabe der Spotfunktion ermittelt wird, daß zur Grauwertkorrektur eine durchschnittliche Anzahl Speicherworte der Spots des Ausschnitts des Rasters ermittelt wird und mit der tatsächlichen Anzahl Speicherworte jeweils eines Spots verglichen wird, daß ein Vergleichsergebnis als Stell-parameter einen Funktionsgenerator in einer Korrekturstufe (72) beeinflußt, die bei einer vergleichsweise großen Anzahl von Speicherworten für Positionen am Anfang der sortierten Folge der Speicherworte des Spots die zuzuordnenden Dichte-Schwellwerte erhöht und dadurch die Anzahl der für niedrige Grauwerte bei Aufzeichnung zu schwärzenden Pixel herabsetzt (untersteuert), jedoch bei einer relativ niedrigen Anzahl Speicherworte des Spots die zuzuordnenden Dichte-Schwellwerte erniedrigt und dadurch die Anzahl der für niedrige Grauwerte zu schwärzenden Pixel erhöht ( übersteuert), die bei einer vergleichsweise großen Anzahl von Speicherworten für Positionen am Ende der sortierten Folge der Speicherworte des Spots die zuzuordnenden Dichte-Schwellwerte erniedrigt und dadurch die Anzahl der für große Grauwerte zu schwärzenden Pixel überhöht (übersteuert), jedoch bei einer relativ niedrigen Anzahl Speicherworte des Spots die zuzuordnenden Dichte-Schwellwerte erhöht und dadurch die Anzahl der für hohe Grauwerte zu schwärzenden Pixel erniedrigt (untersteuert).

3.	Verfahren nach Anspruch 2,
	**dadurch gekennzeichnet**,
	daß ein Funktionsgenerator in der Korrekturstufe (72) verwendet wird, der einen Übergangsbereich zwischen den Bereichen des Über- und Untersteuerns zur Erzeugung der Schwellwerte aufweist.

4.	Verfahren nach Anspruch 2,
	**dadurch gekennzeichnet**,
	daß ein Funktionsgenerator in der Korrekturstufe (72) verwendet wird, der einen linearen Übergangsbereich zwischen den Bereichen des Über- und Untersteuerns zur Erzeugung der Schwellwerte aufweist.

5.	Verfahren nach Anspruch 2,

**dadurch gekennzeichnet,**
daß ein Funktionsgenerator in der Korrekturstufe (72) mit einer implementierten Funktion verwendet wird, die in mehrere Abschnitte unterteilt ist, in denen die Unter- und Übersteuerung am Anfang und Ende der sortierten Folge zu mittleren Positionen hin schrittweise zurückgenommen wird.

6. Verfahren nach Anspruch 2,
**dadurch gekennzeichnet,**
daß die Korrekturstufe Schwellwerte sw nach Maßgabe einer Funktion generiert, die in drei Abschnitte (Funktionsbereiche) unterteilt ist:

1. Abschnitt für $0 < i <$ Istwert $\cdot s_1$:
$$sw = f_1(i) + 1 = m_{soll} \cdot i + 1$$

wobei:
$$m_{soll} = \frac{g_{max}}{\text{Sollwert} + 1}$$
$$g_{max} = \text{maximaler Schwellwert}$$
$$i = \text{Position in der sortierten Folge nach Maßgabe der Spotfunktion}$$

2. Abschnitt für Istwert$\cdot s_1 < i <$ Istwert$\cdot s_2$:
$$sw = \frac{s_2 - i}{s_2 - s_1} \cdot f_1(i) + \frac{i - s_1}{s_2 - s_1} \cdot f_2(i) + 1$$

3. Abschnitt für Istwert $. s_2 < i <$ Istwert:
$$sw = f_2(i) + 1 = m_{soll} \cdot i + b + 1$$

wobei:
$$b = m_{soll} \cdot (\text{Sollwert} - \text{Istwert})$$

Fernhin gilt:
$$\text{Istwert} = \text{tatsächliche Anzahl der Speicherworte des Spots}$$
$$\text{Sollwert} = \text{durchschnittliche Anzahl Speicherworte der Spots}$$
$$0 < s_1 < i < s_2 < 1 \qquad (s_1 \approx 0.3 \qquad s_2 \approx 0.7)$$

7. Verfahren unter Verwendung einer Spotfunktion, bei welcher die Spots (Rasterpunkte) aus der Mitte heraus wachsen, nach einem der vorangehenden Ansprüche;
**dadurch gekennzeichnet,**
daß jeder Spot in vier Quadranten unterteilt wird und zur Weißkorrektur bei relativ großen Grauwerten (größer als 50 %) aus je einem Quadranten von vier benachbarten Spots zusammengesetzt wird.

8. Verfahren unter Verwendung einer Spotfunktion, bei welcher die Spots (Rasterpunkte) von den Ecken herwachsen, nach einem der Ansprüche 1 - 6,
**dadurch gekennzeichnet,**
daß jeder Spot in vier Quadranten unterteilt wird und zur Schwarzkorrektur bei relativ kleinen Grauwerten (kleiner als 50 %) ein der Grauwertkorrektur unterliegendes Quadrat aus je einem Quadranten von vier benachbarten Spots zusammengesetzt wird.

## Claims

1. A method for the generation and storage of digitalised density threshold values for the screening of a half tone image original, in particular in the form of a colour extract (plane), in which in at least one data memory the density threshold values of a section of a screen are stored as memory words a function of a spot function, in which in the section several spots (screen points) which in each case comprise a number of memory words are arranged periodically adjacent to and over each other forming a multiple reference cell (super cell), in which for the memory words of the data memory of the section a sorted sequence is determined in accordance with the spot function and density threshold values are associated with the memory words of the data memory as a function of the position of the memory word in the sorted sequence, characterised in that a number of memory words are associated with each spot of the section of the screen, for each spot a sorted sequence of these memory words is determined in accordance with the spot function and for each spot density threshold values are associated with the memory words associated with the spot as a function of their position in the sorted sequence.

2. A method according to Claim 1,
characterised in that
for each spot of the section of the screen the actual number of memory words is determined individually, for each spot a sorted sequence of memory words is determined in accordance with the spot function, that for grey value correction an average number of memory words of the spots of the section of the screen is determined and is compared with the actual number of memory words of one spot in each case, that a comparison result as adjustment parameter influences a function generator in a correction stage (72), which with a comparatively large number of memory words for positions at the start of the sorted sequence of memory words of the spot increases the density threshold values which are to be associated and thereby reduces (underregulates) the number of pixels to be blackened for low grey values on recording, but with a relatively low number of memory words of the spot decreases the density threshold values to be associated and thereby increases (overregulates) the number of pixels to be blackened for low grey values, which with a comparatively large number of memory words for positions at the end of the sorted sequence of memory words of the spot decreases the density threshold values to be associated and thereby excessively increases (overregulates) the number of pixels to be blackened for high grey values, but with a relatively low number of memory words of the spot increases the density threshold values to be associated and thereby lowers (underregulates) the number of pixels to be blackened for high grey values.

3. A method according to Claim 2,
characterised in that
a function generator is used in the correction stage (72), which

4. A method according to Claim 2,
characterised in that
a function generator is used in the correction stage (72), which generator has a linear transition region between the regions of over- and underregulating to produce the threshold values.

5. A method according to Claim 2,
characterised in that
a function generator is used in the correction stage (72) with an implemented function which is subdivided into several sections, in which the under- and overregulating at the start and end of the sorted sequence is taken back towards mean positions step by step.

6. A method according to Claim 2,
characterised in that
the correction stage generates threshold values sw in accordance with a function which is subdivided into three sections (function zones):
1. Section for $0 < i <$ actual value $\cdot s_1$ :
$$sw = f_1(i) + 1 = m_{nom} \cdot i + 1$$
in which:
$$m_{nom} = \frac{g_{max}}{\text{nominal value} + 1}$$
$g_{max}$ = maximum threshold value
$i$ = position in the sorted sequence in accordance with the spot function
2. Section for actual value $\cdot s_1 < i <$ actual value $\cdot s_2$ :
$$sw = \frac{s_2 - i}{s_2 - s_1} \cdot f_1(i) + \frac{i - s_1}{s_2 - s_1} \cdot f_2(i) + 1$$
3. Section for actual value $\cdot s_2 < i <$ actual value :
$$sw = f_2(i) + 1 = m_{nom} \cdot i + b + 1$$
in which:
$$b = m_{nom} \cdot (\text{nominal value} - \text{actual value})$$
In addition:
actual value = actual number of memory words of the spot
nominal value = average number of memory words of the spots
$$0 < s_1 < i < s_2 < 1 \qquad (s_1 \approx 0.3 \qquad s_2 \approx 0.7)$$

7. A method using a spot function, in which the spots (screen points) grow out from the centre, in accordance with one of the preceding claims,
characterised in that
each spot is subdivided into four quadrants and for white correction with relatively large grey values (greater than 50 %) is composed in each case of a quadrant of four adjacent spots.

8. A method using a spot function in which the spots (screen points) grow from the corners, in accordance with one of Claims 1-6,
characterised in that
each spot is subdivided into four quadrants and for black correction with relatively small grey values ( less than 50 %) a square subject to grey value correction is composed in each case of a quadrant of four adjacent spots.

## Revendications

1. Procédé pour générer et mémoriser des valeurs de seuils de densité numérisés pour tramer une image modèle à demi-teintes, notamment sous la forme d'un extrait de couleurs (plans) selon lequel on enregistre dans au moins une mémoire de données, les valeurs de seuils de densité d'un extrait d'une trame en relation avec une fonction de point comme mots de mémoire, l'extrait comprenant plusieurs points (points de trame) qui englobent chaque fois un certain nombre de mots de mémoire, en étant juxtaposés et superposés, périodiquement pour former une cellule de référence multiple (super cellule), et pour les mots de mémoire de la mémoire de données de l'extrait, on détermine une suite classée d'après l'indication de la fonction de point et on associe aux mots de mémoire de la mémoire de données des valeurs de seuils de densité, en relation avec la position du mot de mémoire dans la suite classée, caractérisé en ce que, à chaque point de l'extrait de la trame, on associe un certain nombre de mots de mémoire et pour chaque point, on détermine une suite classée de ces mots de mémoire selon l'indication de la fonction de point, et à chaque point, on associe les mots de mémoire correspondants à ce point en fonction de leur position dans la suite classée des valeurs de seuils de densité.

2. Procédé selon la revendication 1, caractérisé en ce que, pour chaque point de l'extrait de la trame, on détermine séparément un nombre effectif de mots de mémoire, pour chaque point on détermine une suite classée de mots de mémoire selon l'indication de la fonction de point, en ce que pour la correction des niveaux de gris, on détermine un nombre moyen de mots de mémoire des points de l'extrait de la trame et on compare au nombre effectif de mots de mémoire de chaque point, en ce que par un résultat de comparaison comme paramètre de réglage, on influence un générateur de fonction dans un étage de correction (72) qui, pour un nombre relativement grand de mots de mémoire pour les positions au début de la suite classée des mots de mémoire du point, augmente les valeurs de seuils de densité associés et on diminue ainsi pour les faibles niveaux de gris, le nombre de pixels à noircir à l'inscription (sous-commande), mais pour un nombre de mots de mémoire relativement faible du point, abaisse les valeurs de seuils de densité associés et on augmente ainsi le nombre des pixels à noircir pour des valeurs de gris, faibles (sur-commande), et qui, pour un nombre comparativement grand de mots de mémoire pour les positions à la fin de la suite classée des mots de mémoire du point, abaisse les valeurs de seuils de densité associés et augmente ainsi le nombre des pixels à noircir pour des valeurs de gris faibles (sur-commande) alors que pour un nombre relativement faible de mots de mémoire du point, on augmente les valeurs de seuils de densité associés et on abaisse ainsi le nombre des pixels à noircir pour les niveaux de gris élevés (sous-commande).

3. Procédé selon la revendication 2, caractérisé par un générateur de fonction dans l'étage de correction (72) qui présente une zone transitoire entre les zones de la sur-commande et de la sous-commande pour créer les valeurs de seuils.

4. Procédé selon la revendication 2, caractérisé en ce qu'on utilise un générateur de fonction dans l'étage de correction (72) qui présente une zone transitoire linéaire entre les zones de la sur-commande et de la sous-commande pour créer les valeurs de seuils.

5. Procédé selon la revendication 2, caractérisé en ce qu'on utilise un générateur de fonction dans l'étage de correction (72) avec une fonction implémentée qui est subdivisé en plusieurs segments dans lesquels la sur-commande et la sous-commande sont reprises pas-à-pas au début et à la fin de la suite à classer vers les positions médianes.

6. Procédé selon la revendication 2, caractérisé en ce que l'étage de correction génère les valeurs de seuils (sw) selon une fonction subdivisée entre trois étapes (plages de fonction) :

1. Segment $0 < i <$ valeur réelle.$s_1$ :

$$sw = f_1(i) + 1 = m_{cons}.i + 1$$

dans cette formule :

$$m_{cons} = \frac{g_{max}}{\text{valeur de consigne} + 1}$$

$g_{max} = $ seuil maximum

$i = $ position de la suite classée selon l'indication de la fonction de point.

2. Segment pour : valeur réelle.$s_1 < i <$ valeur réelle.$s_2$ :

$$sw = \frac{s_2 - i}{s_2 - s_1} \cdot f_1(i) + \frac{i - s_1}{s_2 - s_1} \cdot f_2(i) + 1$$

3. Segment pour : valeur réelle.$s_2 < i <$ valeur réelle :

$$sw = f_2(i) + 1 = m_{cons}.i + b + 1$$

dans cette formule :

$$b = m_{cons}.(\text{valeur de consigne} - \text{valeur réelle})$$

en outre, on a :

valeur réelle $= $ nombre effectif de mots de mémoire du point,

valeur de consigne $= $ nombre moyen de mots de mémoire du point.

$$0 < S_1 < i < s_2 < 1 \qquad (s_1 \approx 0{,}3 \qquad s_2 \approx 0{,}7).$$

7. Procédé d'application d'une fonction de point pour laquelle les points (points de trame) se développent à partir du milieu, selon l'une des revendications précédentes, caractérisé en ce que chaque point est subdivisé en quatre cadrans et pour la correction de blanc pour des niveaux de gris relativement importants (supérieur à 50 %), on combine dans chaque cadran quatre points voisins.

8. Procédé appliquant une fonction de point selon laquelle les points (points de trame) se développent à partir des coins, selon l'une des revendications 1 à 6, caractérisé en ce que chaque point est subdivisé en quatre cadrans et pour la correction du noir pour des niveaux de gris relativement faibles (inférieur à 50 %), on combine un carré soumis à la correction du niveau de gris à partir de chaque fois un carré de quatre points voisins.

Fig. 1

*Fig. 2*

*Fig. 3*

externe Grauwertleitung

13

6

1

Datenspeicher
Ref. bereich

9

10

3

Vergleicher

2

Bitmap

7

4

*Fig. 4*

EP 0 539 397 B1

Fig. 5

Fig. 6

Fig. 7

Sezte x' u. y' auf die nächstmögl. Permutation für:
x'=0...(n-1)          y'=0...(n-1)

*73*

Selektiere 4 Quadrantenspeicher eines Spots:
q1x=2·x'          q1y=2·y'
q2x=2·x'          q2y=2·y'+1
q3x=2·x'+1        q3y=2·y'
q4x=2·x'+1        q4y=2·Y'+1

noch
unbearbeitete Einträge
in den Quadrantenlisten
q1....q4?

nein          ja

Bestimme Datenquartett
mit nächstgrößerem
Funktionswert z aus q1...q4
mit gesetztem Gültigkeitsbit v und trage einen
Verweis auf dieses Element
in den Verweisspeicher ein

*74*

Istwert = Anzahl der Einträge in den Verweisspeicher

Bestimme Korrekturkurvenparameter für f(i)

i=1

Selektiere das Datenquartett aus den Quadrantenspeichern q1...q4
auf das der Verweis No. i im Verweisspeicher verweist.Setze das
Gültigkeitsbit v dieses Datenquartetts auf 0,selektiere das Element des Referenzzellenspeichers das durch x und y des Datenquartetts bestimmt ist. Speichere in diesem Referenzzellenspeicher als
Schwellwert: f(i)+1

*75*

Inkrementiere i

i<=
(Istwert/2)
?

nein

letzte
Permutation
für x'u.y'
?

nein          ja

*Fig. 8*

Sezte x' u. y' auf die nächstmögl. Permutation für:
x'=0...(n-1)          y'=0...(n-1)

*73'*

Selektiere 4 Quadantenspeicher von 4 benachbarten Spots:
q1x=2·x'+1                  q1y=2·y'+1
q2x=2·x'+1                  q2y=(2·y'+2)modulo(2·n)
q3x=(2·x'+2)modulo(2·n)    q3y=2·y'+1
q4x=(2·x'+2)modulo(2·n)    q4y=(2·y'+2)modulo(2·n)

noch
unbearbeitete Einträge
in den Quadrantenlisten
q1....q4?

nein          ja

Bestimme Datenquartett
mit nächstgrößerem
Funktionswert z aus q1...q4
mit gesetztem Gültigkeitsbit v und trage einen
Verweis auf dieses Element
in den Verweisspeicher ein

*74'*

Istwert=(Anzahl der Einträge in Verweisspeicher)·2

Bestimme Korrekturkurvenparameter für f(i)

i=1

Selektiere das Datenquartett aus den Quadrantenspeichern q1...q4
auf das der Verweis No. i im Verweisspeicher verweist.Setze das
Gültigkeitsbit v dieses Datenquartetts auf 0,selektiere das Element des Referenzzellenspeichers das durch x u. y d. Datenuartetts
bestimmt ist. Speichere in diesem Referenzzellenelement als
Schwellwert: f(i)+(gmax/2)+1

*75'*

Inkrementiere i

i<=
(Istwert/2)
?                    nein

letzte
Permutation
für x'u.y'
?

nein          ja

*Fig. 9*